# EUROPÄISCHE PATENTSCHRIFT

(11) **EP 3 293 234 B1**
(45) Veröffentlichungstag und Bekanntmachung des Hinweises auf die Patenterteilung: **23.12.2020**
(21) Anmeldenummer: 16187894.7
(22) Anmeldetag: 08.09.2016
(51) Int. Cl.: C09D 11/00, B43K 8/02, C09D 11/10, C09D 11/16

(54) **SCHREIB-, MARKIER- UND/ODER ZEICHENFLÜSSIGKEIT FÜR SCHREIBGERÄTE, INSBESONDERE FÜR KAPILLARSCHREIBGERÄTE, UND SCHREIBGERÄT**
WRITING, MARKING AND/OR SYMBOL LIQUID FOR WRITING INSTRUMENTS, IN PARTICULAR FOR CAPILLARY WRITING INSTRUMENTS, AND WRITING INSTRUMENT
LIQUIDE D'ECRITURE, DE MARQUAGE ET/OU DE DESSIN POUR STYLO, EN PARTICULIER POUR STYLO CAPILLAIRE ET STYLO

(43) Veröffentlichungstag der Anmeldung: 14.03.2018
(73) Patentinhaber: Faber-Castell AG, 90546 Stein (DE)
(72) Erfinder: Schwarz, Wolfgang, 91623 Sachsen bei Ansbach (DE); Lugert, Gerhard, 90431 Nürnberg (DE); Goschala, Concetta, 90449 Nürnberg (DE)
(74) Vertreter: Schlögl, Markus

(56) Entgegenhaltungen:
- JP-A- 2015 155 517
- US-A- 4 290 072
- US-A1- 2011 182 651

## Beschreibung

Die Erfindung betrifft eine Schreib-, Markier- und/oder Zeichenflüssigkeit für Schreibgeräte, insbesondere für Kapillarschreibgeräte, und ein Schreibgerät, in welchem eine solche Schreib-, Markier- und/oder Zeichenflüssigkeit verwendet wird.

Farbige Markierflüssigkeiten für sogenannte Marker auf Basis organischer Lösemittel wie Alkohole, Ester, Ketone oder aromatischer Lösemittel wie Toluol oder Xylol sind seit langem bekannt. Als Farbmittel werden zumeist Pigmente, kationische Farbstoffe, sogenannte Fettfarbstoffe oder Metallkomplexfarbstoffe zusammen mit einem oder mehreren Netzmitteln und Harzen verwendet. Derartige Flüssigkeiten bilden Filme auch auf glatten Oberflächen, wie Glas oder verschiedenen Kunststoffen und sind häufig spritzwasserbeständig.

Schreibgeräte, in welchen solche Schreib-, Markier- und/oder Zeichenflüssigkeiten eingesetzt werden, umfassen einen Schaft, typischerweise ein Kunststoff- oder Metallgehäuse, auf welchen im Nichtgebrauchszustand eine Verschlusskappe aufgesteckt wird. Innerhalb des Schaftes ist ein Speicher für die Schreib-, Markier- und/oder Zeichenflüssigkeit aus einem kapillaren Material, beispielsweise aus Polyester- oder Polyolefinfasern angeordnet, der mit einem Auftragselement aus einem ebenfalls kapillaren Material, z.B. einer Faser- oder Sinterspitze fluidisch verbunden ist, sodass die Schreib-, Markier- und/oder Zeichenflüssigkeit aufgrund von Adhäsionskräften bzw. aufgrund des Kapillareffektes aus dem Speicher an die Spitze des Auftragselementes transportiert werden kann.

Bei einer anderen Variante eines Schreibgerätes wird ein sogenanntes Ventilsystem eingesetzt, wobei die Schreib-, Markier- und/oder Zeichenflüssigkeit als frei fließende Flüssigkeit in ein Reservoir innerhalb des Schaftes gefüllt ist und eine Flüssigkeitsabgabe über eine Schreib- oder Markierspitze, vorzugsweise aus Polyester- oder Acrylfasern oder auch aus gesinterten Polyolefinen stattfindet. Zur geregelten Flüssigkeitsabgabe ist zwischen der Spitze und dem Reservoir ein Ventil vorgesehen.

Bei letzterem System werden insbesondere bei hochviskosen, pigmentierten Flüssigkeiten häufig eine oder mehrere Mischkugeln in der Flüssigkeit eingesetzt, um vor der Applikation der Flüssigkeit durch Schütteln des Schreibgerätes eine Homogenisierung der Flüssigkeit herbeizuführen. Bei Kapillarsystemen ist der Einsatz solcher Mischkugeln nicht möglich. Die in Kapillarsystemen eingesetzten Flüssigkeiten müssen zur Sicherstellung einer ausreichenden Applikation außerdem sehr geringe Viskositäten von kleiner 50 mPas, bevorzugt jedoch kleiner 20 mPas (Brookfield, 20°C, Kegel-Platte CPE-40) besitzen.

Schreibgeräte, bei denen die Schreib-, Markier- und/oder Zeichenflüssigkeit in einem Speicher aus kapillarem Material gebunden ist und die Alkohole, gegebenenfalls zusammen mit Ketonen und/oder Estern enthält, zeigen nach der Applikation und dem Antrocknen auf glatten Flächen, z. B. auf Glas oder Kunststoffen, wie Polyolefinen, jedoch den Nachteil, dass die Aufstriche nicht wasserfest, sondern lediglich spritzwasserfest sind. Beim Eintauchen der markierten Gläser, Kunststoffe oder Keramiken in Wasser bei Raumtemperatur über einen Zeitraum von ca. 30 Minuten oder einem Beregnungstest über 30 Minuten hinweg, lassen sich derartige Aufstriche weitgehend, zum Teil auch vollständig, entfernen. Ferner lässt sich bei Schreibgeräten mit Kapillarsystemen mit den bisher bekannten Schreib-, Markier- und/oder Zeichenflüssigkeiten nur eine mangelhafte Benetzung der Oberfläche auf mit Fett oder Öl verunreinigten Oberflächen erreichen. Sofern überhaupt eine Benetzung beobachtet werden kann, kann der Aufstrich leicht wieder abgewischt werden. Auch bei Markierungen auf Polyester- oder Polypropylenoberflächen liegt bei herkömmlichen Schreib-, Markier- und/oder Zeichenflüssigkeiten nur eine sehr eingeschränkte Wischfestigkeit vor, sodass erzeugte Aufstriche leicht verwischt und somit unleserlich werden. Auch wurde lediglich eine geringe Lichtechtheit der Aufstriche nach Belichtung mit UV-Licht festgestellt.

Sogenannte Industriemarker enthalten zumeist höherviskose farbige Schreib-, Markier- und/oder Zeichenflüssigkeiten und können aufgrund der hohen Viskosität (größer 50 mPas, 20 °C Brookfield, Kegel-Platte CPE-40) nicht durch herkömmliche Kapillarsysteme, sondern nur über Ventilsysteme appliziert werden. Zwar zeigen die Flüssigkeiten bzw. damit erzeugte Aufstriche meist eine verbesserte Wischfestigkeit und zudem in einigen Fällen auch eine gute Wasserfestigkeit. Eine Beschriftung von Kunststoffoberflächen, die mit einem dünnen Fett- oder Ölfilm überzogen ist jedoch nur teilweise möglich und somit noch nicht zufriedenstellend. Zudem besitzen Industriemarker den Nachteil, dass als Lösemittel toxikologisch bedenkliche aromatische Lösungsmittel, wie Xylol und/oder Toluol eingesetzt werden. Die Lichtechtheit der Aufstriche ist ferner teilweise als sehr mangelhaft einzustufen.

Aus JP 2015 155517 A ist eine Tintenflüssigkeit für einen Tintenstrahldrucker bekannt, bei der ein thermoplastisches Polyesterharz in Kombination mit einem weiteren Harz in einem Lösemittel gelöst ist.

In US 4 290 072 A ist ebenfalls eine Tintenflüssigkeit für einen Tintenstrahldrucker beschrieben, welche ein Harzgemisch enthalten kann, welches in einer Lösemittelmatrix gelöst wird.

US 2011/182651 A1 beschreibt eine Metallictinte, bei der ein Harz, ausgewählt aus der Gruppe Maleinatharz und/oder mit Maleinsäure modifiziertes Kolophoniumharz, in Wasser gelöst vorliegt.

Es ist daher Aufgabe der Erfindung, eine Schreib-, Markier- und/oder Zeichenflüssigkeit für ein Schreibgerät, insbesondere ein Kapillarschreibgerät vorzuschlagen, welche hinsichtlich der geschilderten Nachteile und Probleme verbessert ist. Ferner ist es Aufgabe der Erfindung ein Schreibgerät, insbesondere ein Kapillarschreibgerät anzugeben, in welchem die Schreib-, Markier- und/oder Zeichenflüssigkeit zum Einsatz kommt.

Die erstgenannte Aufgabe wird gelöst mit einer Schreib-, Markier- und/oder Zeichenflüssigkeit für Schreibgeräte, insbesondere für Kapillarschreibgeräte, mit den Merkmalen gemäß Anspruch 1. Die Schreib-, Markier- und/oder Zeichenflüssigkeit weist eine Viskosität von weniger als 50 mPas (Brookfield, 20 °C, Kegel-Platte CPE-40) auf und enthält ein in einer zumindest ein Lösemittel umfassenden Lösemittelmatrix gelöstes Harzgemisch. Das Harzgemisch enthält zumindest ein erstes und ein zweites Harz, wobei als erstes Harz ein Haftharz, vorliegend ein modifizierter Harzester und/oder ein in gelöster Form vorliegendes Polyesterharz und als zweites Harz ein Hartharz, vorliegend ein Maleinatharz und/oder ein Kolophoniumharz, insbesondere ein phenolmodifiziertes Kolophoniumharz, enthalten sind. Unter einem Hartharz ist ein solches Harz zu verstehen, welches bei Raumtemperatur fest ist, ein Haftharz bzw. "Klebeharz" zeichnet sich besonders durch seine klebrigen Eigenschaften aus und wirkt somit vorrangig als Bindemittel. Der Begriff Harze wird als Sammelbegriff für feste bis flüssige (organische) Stoffe verwendet. In der Technik bezeichnet man Harze, die einen harten Lackfilm hervorrufen, als Hartharze. Bei diesen Stoffen liegt der Schmelzbereich bei ca. 100 °C oder höher. Haft- oder Klebeharze sind bei Raumtemperatur weich, hochviskos oder flüssig. Ferner enthält die Schreib-Markier- und/oder Zeichenflüssigkeit als Additive zumindest ein Fluortensid als Netzmittel mit einem Anteil von 0,3 bis 2,0 Gew.-% und zumindest ein Polyethersiloxan-Copolymer als Gleitmittel mit einem Anteil von 0,3 bis 2,0 Gew.-%.

Ausgehend von Schreib-, Markier- und/oder Zeichenflüssigkeiten, bei denen als Lösemittelmatrix beispielsweise Mischungen aus Alkoholen eingesetzt werden, wurden umfängliche Versuchsreihen mit verschiedenen Harzen durchgeführt. Als besonders geeignet zeigte sich dabei das erfindungsgemäße Harzgemisch, bei dem Haftharze bzw. "Klebeharze", die auch für den Einsatz in Flexodruckfarben bekannt sind, in Verbindung mit einem Hartharz verwendet wurden. Die beiden Harze lassen sich gut vermischen und wirken als Bindemittel und Trägersubstanz für mögliche weitere in der Schreib-, Markier- und/oder Zeichenflüssigkeit vorhandene Bestandteile. Gerade durch die Kombination eines Hartharzes mit einem Haftharz lassen sich niederviskose Flüssigkeiten mit einer Viskosität kleiner 50 mPas herstellen, die über Kapillarsysteme appliziert werden können. Die mit der Schreib-, Markier- und/oder Zeichenflüssigkeit erzeugten Aufstriche zeigen zudem eine deutlich verbesserte Abriebfestigkeit gegenüber bisher bekannten kapillargebundenen Markierflüssigkeiten und eine gute Wasserfestigkeit. Dabei ist das Hartharz hauptsächlich für die Härte, den Glanz und die Trocknungsgeschwindigkeit des erzeugten Aufstriches bzw. Lackfilmes verantwortlich, wohingegen Haft- oder Klebeharze für eine bessere Haftung und Flexibilität des Lackfilms bzw. des Tintenauftrages sorgen. Im Folgenden wird vereinfachend vorwiegend auf Markierflüssigkeiten Bezug genommen.

Als erstes Harz bzw. Haftharz ist erfindungsgemäß ein modifizierter Harzester und/oder ein in gelöster Form vorliegendes Polyesterharz, also eine Polyesterharzlösung und/oder als zweites Harz bzw. Hartharz ist vorzugsweise ein Maleinatharz und/oder ein Kolophoniumharz, insbesondere ein phenolmodifiziertes Kolophoniumharz enthalten. Als Polyesterharzlösung wird beispielsweise eine Lösung von Polyesterharzen in z.B. Ethylacetat als Lösemittel eingesetzt. Gerade bei diesen Haft- bzw. Hartharzen zeigten sich gute bis sehr gute Haftfestigkeiten sowohl auf glatten Oberflächen, wie beispielsweise Glas, glasierte Keramik, Polyester- oder Polyolefinfolien, als auch auf Oberflächen, die einen sehr dünnen Fett- oder Ölfilm aufweisen. Die Wischfestigkeit und Abriebfestigkeit ist deutlich verbessert.

Ein modifizierter Harzester, der insbesondere als erstes Harz bzw. Haftharz eingesetzt wird, weist folgenden Eigenschaften auf:

| | |
|---|---|
| Viskosität (Auslaufzeit 80%ig in Ethylacetat / 20 °C; 4 DIN 53211): Dynamische Viskosität 100% / 40 °C; DIN 53214) | 20 bis 40 s |
| | 4000 - 8000 mPa s |
| Säurezahl (DIN ISO EN 2114): | ≤ 20 mg KOH/g |
| Farbzahl (Gardner Color Standard; | |
| 50%ig in Ethylacetat ASTM D 1544) | ≤ 8 |
| Lieferform | flüssig, 80%ig in Ethylacetat |

Ein solches Harz ist beispielsweise unter dem Handelsnamen BREMAR 9020¹⁾ erhältlich.

Das als erstes Harz ebenfalls bevorzugt verwendete Haftharz ist eine Lösung eines Polyesterharzes, mit folgenden Eigenschaften:

| | |
|---|---|
| Viskosität bei 23 °C (Lieferform): | ca. 500 mPas |
| Säurezahl (DIN ISO EN 2114): | ca. 18 mg KOH/g |
| Farbzahl Gardner (Lieferform): | ca. 1 |
| Lieferform: | flüssig, ca. 60%ig in n-Butylacetat |

Ein solches Harz ist beispielsweise unter dem Handelsnamen TEGO® AddBond 2325⁷⁾ erhältlich.

Als Hartharz bzw. als zweites Harz zeigte sich ein modifiziertes Maleinatharz, also ein Harz, an welches Maleinsäure derart gebunden ist, dass sich ein Harz mit einer Säurezahl (DIN ISO EN 2114) von 230 bis 250 mg KOH/g ergibt, mit folgender Charakteristik als besonders geeignet:

| | |
|---|---|
| Schmelzpunkt (Kofler-Heizbank, 6 min): | 100 ± 10 °C |
| Viskosität (Auslaufzeit 65%ig in | |
| Ethanol / 20 °C; 4 DIN 53211): | 20 bis 40 s |
| Säurezahl (DIN ISO EN 2114): | 230 bis 250 mg KOH/g |
| Farbzahl (Gardner Color Standard; | |
| 50%ig in Ethanol ASTMD 1544) | ≤ 2 |
| Dichte (Lieferform 20 °C) | 1,1 g/cm³ |

Ein solches Harz ist z.B. unter dem Handelsnamen ERKAMAR VP 6737¹⁾ erhältlich.

Ein weiteres Harz, welches als Hartharz bzw. zweites Harz verwendet wird, ist ein phenolmodifiziertes Kolophoniumharz, also ein Harz, an welches Phenol gebunden ist, und zwar in einer Weise, dass das sich daraus ergebende Harz eine Säurezahl (DIN ISO EN 2114) von 130 bis 150 mg KOH/g sowie nachfolgende Eigenschaften aufweist:

| | |
|---|---|
| Schmelzpunkt (Kofler-Heizbank, 6 min): | 110 ± 10 °C |
| Viskosität (Auslaufzeit 60%ig in | |
| Xylol / 20 °C; 4 DIN 53211): | 45 bis 60 s |
| Säurezahl (DIN ISO EN 2114): | 130 bis 150 mg KOH/g |
| Farbzahl (Gardner Color Standard; 50%ig in Xylol ASTMD 1544) | |
| | ≤ 10 |
| Dichte (Lieferform 20 °C) | 1,1 g/cm³ |

Ein solches Harz ist beispielsweise unter dem Handelsnamen BREMAPAL 3005¹⁾ erhältlich.

Um bestimmte Eigenschaften der Schreib-, Markier- und/oder Zeichenflüssigkeit zu erreichen und diese weiter zu verbessern oder auch um die Vermischung der einzelnen Bestandteile der Markierflüssigkeit bei deren Herstellung zu verbessern, weist die Schreib-, Markier- und/oder Zeichenflüssigkeit Additive, insbesondere mit einem Anteil von 0,1 bis 8 Gew.-%, besonders bevorzugt mit einem Anteil von 0,1 bis 5 Gew.-% auf. Als Additive kommen prinzipiell verschiedenste Zusatzstoffe, wie z.B. Dispergiermittel, Antioxidantien, Lichtschutzmittel oder Korrosionsschutzmittel in Betracht. Erfindungsgemäß ist als Additiv zumindest ein Fluortensid als Netzmittel mit einem Anteil von 0,3 bis 2,0 Gew.-% enthalten. Dadurch werden zum einen die Löslichkeit der beiden Harze und deren Verteilung in der Lösemittelmatrix unterstützt. Zum anderen wirkt sich das Tensid, vorliegend das Fluortensid positiv auf die Eigenschaften des mit der Markierflüssigkeit erzeugten Aufstriches aus, indem dieses die Haftfestigkeit, insbesondere auf einer einen Fett- oder Ölfilm aufweisenden Fläche erhöht. Zudem lassen sich so gleichmäßige Aufstriche mit einer glatten und glänzenden Oberfläche erzeugen.

Ferner ist erfindungsgemäß zumindest ein Polyethersiloxan-Copolymer als Gleitmittel mit einem Anteil von 0,3 bis 2,0 Gew.-% enthalten, wodurch sich sowohl die Filmbildung, insbesondere hinsichtlich der Gleichmäßigkeit des Films, als auch die Kratzfestigkeit des Films deutlich steigern lassen.

Durch den Anteil des Harzgemisches in der Schreib-, Markier- und/oder Zeichenflüssigkeit lässt sich die Haftfestigkeit des Aufstriches auf einer Unterlage, beispielsweise auf Papier oder einer Kunststofffolie beeinflussen. Für eine deutlich verbesserte Haftfestigkeit der mit der Schreib-, Markier- und/oder Zeichenflüssigkeit erzeugten Aufstriche hat sich ein Anteil von 3 bis 30 Gew.-% des Harzgemisches bzw. des in der Flüssigkeit vorhandenen Gesamtharzes - bezogen auf die gesamte Masse der Markierflüssigkeit - bewährt. Durch eine Begrenzung des Anteils des Haftgemisches auf maximal 30 Gew.-% ist sichergestellt, dass zwar eine sehr gute Haftfestigkeit erreicht wird, die Viskosität der Markierflüssigkeit 50 mPas jedoch nicht überschreitet. Dadurch ist eine zuverlässige Applikation über Kapillarsysteme gewährleistet, ohne dass die Gefahr einer Verstopfung der Kapillarkanäle besteht.

Dabei ist bei einer bevorzugten Zusammensetzung das erste Harz mit einem Anteil von 1 bis 25 Gew.-%, insbesondere 1 bis 20 Gew.-% und/oder das zweite Harz mit einem Anteil von 2 bis 25 Gew.-%, insbesondere 2 bis 20 Gew.-% enthalten. Diese Angabe ist auf den Feststoffanteil der Harze in der Lösemittelmatrix bzw. sofern weitere Bestandteile enthalten sind an der Gesamtmasse der Markierflüssigkeit bezogen. Durch die Wahl des Verhältnisses zwischen dem ersten und dem zweiten Harz bzw. dem Haftharz und dem Hartharz lässt sich insbesondere auch die Abrieb- und Wischfestigkeit auf glatten Oberflächen weiter verbessern, wobei ein höherer Anteil des zweiten Harzes, also des Hartharzes vorteilhaft ist. Ein Verhältnis von erstem Harz zu zweitem Harz zwischen 1:1 und 1:5, insbesondere zwischen 1:1 und 1:3 als besonders geeignet herausgestellt hat. Innerhalb dieser Grenzen führt eine Erhöhung der Konzentration des Hartharzes zu einer höheren Filmhärte, also einer besseren Abrieb- und Wischfestigkeit und einer schnelleren Filmtrocknung.

Als Lösemittelmatrix ist vorzugsweise zumindest ein Lösemittel, insbesondere ein organisches Lösemittel mit einem Anteil von 50 bis 80 Gew.-% enthalten. Insbesondere der Einsatz eines Alkohols in Kombination mit einem Keton oder die Verwendung eines Alkohols mit einem Keton und einem Ester als Lösemittelmatrix verbessert die Lösbarkeit der beiden Harze in der Lösemittelmatrix und fördert deren Vermischung während der Herstellung der Markierflüssigkeit. Dadurch werden wiederum auch die Haft- und Abriebeigenschaften der Schreib-, Markier- und/oder Zeichenflüssigkeit positiv beeinflusst. Als besonders geeignete Lösemittel sind Methyl-Ethyl-Keton und/oder 1-Methoxy-2-propanol und/oder Ethanol und/oder 1-Propanol und/oder 2-Propanol und/oder Ethylacetat in beliebiger Kombination zu nennen. Als bevorzugte Lösemittelkombination hat sich eine Mischung aus Methyl-Ethyl-Keton, 1-Methoxy-2-propanol und Ethanol herausgestellt. Diese Lösungsmittel sind im Vergleich zu aromatischen Lösungsmitteln, wie Xylol oder Toluol, gesundheitlich unbedenklich.

Um farbige Schreib-, Markier- und/oder Zeichenflüssigkeit zu erzeugen, ist darin zumindest ein Farbmittel, insbesondere mit einem Anteil von 5 bis 20 Gew.-%, noch mehr bevorzugt mit einem Anteil von 8 bis 15 Gew.-% enthalten. Sogenannte Metallkomplexfarbstoffe als Farbstoff, wie z.B. CI Solvent Red 160, CI Solvent Yellow 82, CI Solvent Blue 44, CI Solvent Blue 67, CI Solvent Black 27 haben sich dabei als besonders geeignet erwiesen. Auch Pigmente, wie z.B. Ruß können als Farbmittel eingesetzt werden. Das Farbmittel wird durch das in der Lösemittelmatrix gelöste Harzgemisch gut in der Markierflüssigkeit gebunden, wodurch das Migrationsverhalten der Markierflüssigkeit bzw. des Farbmittels, also das Eindringen derselben in die Oberfläche auf der der Aufstrich erzeugt wird, deutlich verbessert wird. Somit wird ein Verblassen oder Verschwinden des Aufstriches bzw. eine Änderung des Farbtons des Aufstriches reduziert. Ferner zeigen die Aufstriche aufgrund des verwendeten Harzgemisches eine hervorragende Lichtechtheit.

Durch Variation der einzelnen beschriebenen Bestandteile der Schreib-, Markier- und/oder Zeichenflüssigkeit lässt sich deren Viskosität vorteilhafterweise auf weniger als 20 mPas, insbesondere weniger als 10 mPas (Brookfield, 20 °C, Kegel-Platte CPE-40) senken, um die Kapillargängigkeit zu erhöhen.

Die Markierflüssigkeit wird in einem Schreibgerät, insbesondere einem Kapillarschreibgerät verwendet. Das Schreibgerät weist hierfür eine Ausgestaltung mit den Merkmalen gemäß Anspruch 11 auf und umfasst eine Schreibspitze aus einem kapillaren Material und einen eine Schreib-, Markier- und/oder Zeichenflüssigkeit mit den vorstehend beschriebenen Eigenschaften enthaltenden Speicher aus einem kapillaren Material.

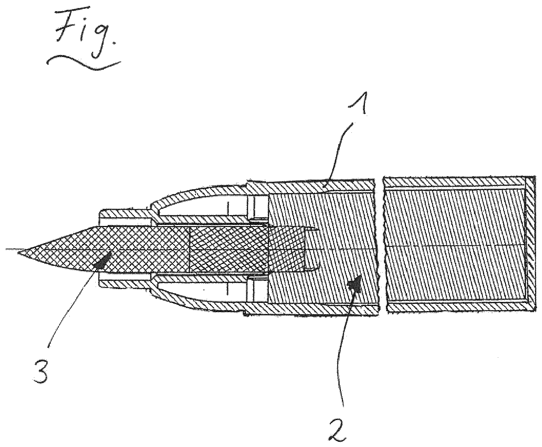

Die Erfindung wird nun nachfolgend anhand von Ausführungsbeispielen und einer Zeichnung (Fig. 1), die ein kapillares Schreibgerät in Längsschnittdarstellung zeigt, näher erläutert.

Das Schreibgerät, z.B. ein Marker, ist im Wesentlichen stiftförmig und weist einen Schaft 1 auf, in dem ein Speicher 2 aus einem kapillaren Material bzw. ein Faserspeicher geringer Dichte, z.B. ein Polyesterfaserspeicher vorhanden ist. Das vordere Stiftende trägt eine Schreibspitze 3 aus einem kapillaren Material bzw. eine Faserspitze, die mit ihrem hinteren Ende mit dem Faserspeicher 2 in Verbindung steht bzw. in diesen hineinragt.

Die Herstellung der Schreib-, Markier- und/oder Zeichenflüssigkeit erfolgt überwiegend in Mischkesseln, in welchen in die Lösemittel sukzessive die Harzbestandteile, also das Hartharz und das Haftharz, sowie die weiteren Komponenten, beispielsweise Farbmittel oder Additive, zugesetzt werden. Dabei wird ständig mit einem Rührer homogenisiert, um die Komponenten intensiv miteinander zu vermischen und ausreichend gleichmäßig zu verteilen. Während der Herstellung erfolgt zudem eine leichte Erhöhung der Temperatur auf ca. 40 bis 45 °C. Verdunstete Lösemittelanteile werden am Ende des Homogenisierungsprozesses ergänzt. Anschließend wird die so erhaltene Schreib-, Markier- und/oder Zeichenflüssigkeit in den Speicher 2 aus kapillarem Material des oben beschriebenen Schreibgerätes eingefüllt.

Bei der Durchführung der Versuche wurden mit dem Schreibgerät Aufstriche auf verschiedenen Unterlagen, unter anderem auf Papier, auf glatten Flächen wie Glas oder Kunststoffen sowie auf mit Fett oder Öl verunreinigten Oberflächen, erzeugt. Der Aufstrich wurde anschließend anhand verschiedener Kriterien bewertet. Zum einen wurde die Farbe des Aufstriches hinsichtlich der Intensität nach einer Wartezeit von wenigen Sekunden sowie die Lichtechtheit des Aufstriches nach einer Bestrahlung mit UV-Licht beurteilt. Zum anderen wurden Abwischtests durchgeführt, um die Haftung und Abriebfestigkeit des Aufstriches zu analysieren.

Nachfolgend sind vier Beispielrezepturen für Schreib-, Markier- und/oder Zeichenflüssigkeiten angeführt:

### Beispiel 1:

Beispielrezeptur einer roten Markierflüssigkeit mit einer Viskosität von 4,0 mPas (Brookfield, 20 °C, Kegel-Platte CPE-40):

| | |
|---|---|
| Modifiziertes Maleinatharz¹⁾ | 12,0 Gew. % |
| modifizierter Harzester 80%ig in Ethylacetat¹⁾ | 5,0 Gew. % |
| Methyl-Ethyl-Keton | 27,5 Gew. % |
| 1-Methoxy-2-Propanol | 23,0 Gew. % |
| Ethanol | 21,0 Gew. % |
| Fluortensid: Perfluoralkyl substituierter | |
| Polyether, CAS 52550-44-4⁶⁾ | 0,5 Gew. % |
| C.I. Solvent Yellow 82³⁾ | 1,0 Gew. % |
| Solvent Red 160²⁾ | 9,0 Gew. % |
| Polyethersiloxan-Copolymer⁷⁾ | 1,0 Gew. % |

In der gemäß Beispiel 1 eingesetzten Lösemittelmatrix - eine Mischung aus Methyl-Ethyl-Keton, 1-Methoxy-2-propanol und Ethanol - ist das Harzgemisch besonders gut lösbar. Aufstriche, die mit einer Markierflüssigkeit gemäß Beispiel 1 erzeugt wurden, zeigen im Vergleich zu handelsüblichen alkoholischen Permanent-Marker-Tinten aufgrund des als Haftharz verwendeten Harzesters eine gute Wasserfestigkeit, insbesondere auf Glas oder Keramikoberflächen.

### Beispiel 2:

Beispielrezeptur für eine blaue Markierflüssigkeit mit einer Viskosität von 4,3 mPas (Brookfield, 20 °C, Kegel-Platte CPE-40):

| | |
|---|---|
| Phenolmodifiziertes Kolophoniumharz¹⁾ | 14,0 Gew. % |
| Modifizierter Harzester 80 %ig in Ethylacetat¹⁾ | 6,0 Gew. % |
| Methyl-Ethyl-Keton | 25,0 Gew. % |
| 2-Propanol | 22,0 Gew. % |
| Ethanol | 20,0 Gew. % |
| Polyethersiloxan-Copolymer⁷⁾ | 1,8 Gew. % |
| Fluortensid FC-4430⁵⁾ | 1,2 Gew. % |
| C.I. Solvent Blue 44⁴⁾ | 10,0 Gew. % |

Beispiel 2 weist den höchsten Anteil an Additiven, nämlich 1,2 Gew.-% Fluortensid und 1,8 Gew.-% Polyethersiloxan-Copolymer auf. Dadurch hat der Aufstrich eine besonders gute Haftfestigkeit, auch auf öl- oder fetthaltigen Oberflächen gezeigt. Ferner zeigte der Aufstrich eine gleichmäßige Filmbildung. Ein weiterer Unterschied gegenüber der Markierflüssigkeit gemäß Beispiel 1 besteht darin, dass als Hartharz ein phenolmodifiziertes Kolophoniumharz eingesetzt wird, wodurch die Markierflüssigkeit universeller einsetzbar ist. Das bedeutet, dass die Markierflüssigkeit sowohl eine gute Wasserfestigkeit, Wisch- und Abriebfestigkeit auf unterschiedlichen Substraten zeigt. Ferner können auch noch schwierigere Untergründe, wie z.B. leicht fettiges Polypropylen benetzt werden.

### Beispiel 3:

Beispielrezeptur für eine grüne Markierflüssigkeit mit einer Viskosität von 10,0 mPas (Brookfield, 20 °C, Kegel-Platte CPE-40):

| | |
|---|---|
| Modifiziertes Maleinatharz¹⁾ | 8,0 Gew. % |
| Haftharzlösung für lösemittelhaltige Formulierungen (Polyesterharz styrolfrei, Lieferform flüssig, Feststoffanteil ca. 60 Gew. % in n-Butylacetat)⁷⁾ | 8,0 Gew. % |
| Methyl-Ethyl-Keton | 26,0 Gew. % |
| 2-Propanol | 22,0 Gew. % |
| Ethanol | 20,0 Gew. % |
| Fluortensid FC-4430⁵⁾ | 1,0 Gew. % |
| Polyethersiloxan-Copolymer⁷⁾ | 1,0 Gew. % |
| C.I. Solvent Yellow 82³⁾ | 6,0 Gew. % |
| C.I. Solvent Blue 44⁴⁾ | 8,0 Gew. % |

Bei der Rezeptur gemäß Beispiel 3 sind das erste und das zweite Harz zu gleichen Teilen, also in einem Verhältnis 1:1 vorhanden, sodass die Markierflüssigkeit im Vergleich zu den anderen Beispielen insgesamt eine höhere, aber dennoch ausreichend geringe Viskosität für Kapillarschreibgeräte von 10,0 mPas aufweist. Ferner zeigten Aufstriche von Markierflüssigkeiten, bei denen Haftharz und Harthart in annähernd gleichen Konzentrationen vorliegen insbesondere bei der Beschriftung von Glas oder Keramikoberflächen eine gute Wasserfestigkeit.

### Beispiel 4:

Beispielrezeptur für eine schwarze Markierflüssigkeit mit einer Viskosität von 6,0 mPas (Brookfield, 20 °C, Kegel-Platte CPE-40):

| | |
|---|---|
| Phenolmodifiziertes Kolophoniumharz¹⁾ | 10,0 Gew. % |
| Modifizierter Harzester 80%ig in Ethylacetat¹⁾ | 8,0 Gew. % |
| Ethylacetat | 10,0 Gew. % |
| Methyl-Ethyl-Keton | 20,0 Gew. % |
| 1-Propanol | 20,0 Gew. % |
| Ethanol | 19,0 Gew. % |
| Fluortensid TividaFL2500⁸⁾ | 0,5 Gew. % |
| Polyethersiloxan-Copolymer⁷⁾ | 0,5 Gew. % |
| Pigment Black 7 (Hostatint-Schwarz A-N 100)⁹⁾ | 12,0 Gew. % |

Das hier genannte Farbmittel ist ein Ruß-Pigment in einer lösemittelbasierten Aldehydharz-Präparation. Hierdurch ergibt sich eine weitere Verbesserung der Universalität. Die Haftfestigkeit, Abriebresistenz, Wasserfestigkeit eines mit einer Markierflüssigkeit gemäß Beispiel 4 erzeugten Aufstriches auf diversen Substraten werden erhöht. Ferner ist durch Verwendung des Ruß-Pigments die Lichtbeständigkeit ausgezeichnet.

Die angegebenen Angaben in Gewichtsprozent beziehen sich jeweils auf die Gesamtmasse der Schreib-, Markier- und/oder Zeichenflüssigkeit.

### Produktbezeichnungen/Hersteller:

1) Robert Kraemer GmbH & Co. KG, 26180 Rastede, Deutschland
2) Reinhard Neuscheler Handelsvertretungen CDH, 72766 Reutlingen, Deutschland
3) Ming-Zu Europe GmbH, D-79576 Weil am Rhein, Deutschland
4) Clariant Iberica Produccion, S.A., 08970 Sant Joan Despi, Spanien
5) 3M Österreich GmbH, 2380 Perchtoldsdorf, Österreich
6) Sintal Chemie GbmH, 22605 Hamburg, Deutschland
7) Evonik Resource Efficiency GmbH, 45127 Essen, Deutschland
8) Merck KgaA, 64271 Darmstadt, Deutschland
9) Clariant AG, D-65929 Frankfurt am Main)

## Patentansprüche

1. Schreib-, Markier- und/oder Zeichenflüssigkeit für Schreibgeräte, insbesondere für Kapillarschreibgeräte, die eine Viskosität von weniger als 50 mPas (Brookfield, 20 °C, Kegel-Platte CPE-40) aufweist, enthaltend ein in einer zumindest ein Lösemittel umfassenden Lösemittelmatrix gelöstes Harzgemisch, wobei das Harzgemisch als ein erstes Harz einen modifizierten Harzester oder ein in gelöster Form vorliegendes Polyesterharz und als ein zweites Harz ein Maleinatharz oder ein Kolophoniumharz, insbesondere ein phenolmodifiziertes Kolophoniumharz enthält, und wobei als Additive zumindest ein Fluortensid als Netzmittel mit einem Anteil von 0,3 bis 2,0 Gew.-% und zumindest ein Polyethersiloxan-Copolymer als Gleitmittel mit einem Anteil von 0,3 bis 2,0 Gew.-% enthalten sind.

2. Schreib-, Markier- und/oder Zeichenflüssigkeit nach Anspruch 1, **dadurch gekennzeichnet, dass** 3 bis 30 Gew.-% an Harzgemisch enthalten sind.

3. Schreib-, Markier- und/oder Zeichenflüssigkeit nach einem der vorhergehenden Ansprüche, **dadurch gekennzeichnet, dass** das erste Harz mit einem Anteil von 1 bis 25 Gew.-%, insbesondere 1 bis 20 Gew.-% und/oder das zweite Harz mit einem Anteil von 2 bis 25 Gew.-%, insbesondere 2 bis 20 Gew.-% enthalten ist.

4. Schreib-, Markier- und/oder Zeichenflüssigkeit nach einem der vorhergehenden Ansprüche, **dadurch gekennzeichnet, dass** das Verhältnis von erstem Harz zu zweitem Harz zwischen 1:1 und 1:5, insbesondere zwischen 1:1 und 1:3 liegt.

5. Schreib-, Markier- und/oder Zeichenflüssigkeit nach einem der vorhergehenden Ansprüche, **dadurch gekennzeichnet, dass** als Lösemittelmatrix 50 bis 80 Gew.-% zumindest eines Lösemittels, insbesondere eines organischen Lösemittels enthalten ist.

6. Schreib-, Markier- und/oder Zeichenflüssigkeit nach einem der vorhergehenden Ansprüche, **dadurch gekennzeichnet, dass** in der Lösemittelmatrix ein Alkohol und ein Keton oder ein Alkohol, ein Keton und ein Ester enthalten ist.

7. Schreib-, Markier- und/oder Zeichenflüssigkeit nach einem der vorhergehenden Ansprüche, **dadurch gekennzeichnet, dass** als Lösemittel Methyl-Ethyl-Keton und/oder 1-Methoxy-2-propanol und/oder Ethanol und/oder 1-Propanol und/oder 2-Propanol und/oder Ethylacetat enthalten ist.

8. Schreib-, Markier- und/oder Zeichenflüssigkeit nach einem der vorhergehenden Ansprüche, **dadurch gekennzeichnet, dass** zumindest ein Farbmittel, insbesondere mit einem Anteil von 5 bis 20 Gew.-%, insbesondere mit einem Anteil von 8 bis 15 Gew.-% enthalten ist.

9. Schreib-, Markier- und/oder Zeichenflüssigkeit nach Anspruch 8, **dadurch gekennzeichnet, dass** als Farbmittel ein Farbstoff, insbesondere ein Metallkomplexfarbstoff, und/oder ein Farbpigment enthalten ist.

10. Schreib-, Markier- und/oder Zeichenflüssigkeit nach einem der vorhergehenden Ansprüche, **gekennzeichnet durch** eine Viskosität von weniger als 20 mPas, insbesondere weniger als 10 mPas (Brookfield, 20 °C, Kegel-Platte CPE-40).

11. Schreibgerät mit einer Schreibspitze (3) aus einem kapillaren Material und einem eine Schreib-, Markier- und/oder Zeichenflüssigkeit nach einem der vorhergehenden Ansprüche enthaltenden Speicher (2) aus einem kapillaren Material.

## Claims

1. Writing-, marking- and/or drawing fluid for writing instruments, in particular for capillary writing instruments, which has a viscosity of less than 50mPas (Brookfield, 20°C, cone-plate CPE-40), containing a resin mixture dissolved in a solvent matrix comprising at least one solvent, wherein the resin mixture contains, as a first resin, a modified resin ester or a polyester resin in dissolved form and, as a second resin, a maleic resin or a colophony resin, in particular a phenol-modified colophony resin, and wherein as additives, at least one fluoro-surfactant as a wetting agent in a proportion of from 0.3 to 2.0% by weight and at least one polyether siloxane copolymer as a lubricant in a proportion of from 0.3 to 2.0% by weight are contained.

2. Writing-, marking- and/or drawing fluid according to claim 1, **characterised in that** 3 to 30% by weight of resin mixture is contained.

3. Writing-, marking- and/or drawing fluid according to one of the preceding claims, **characterised in that** the first resin is contained in a proportion of from 1 to 25% by weight, in particular 1 to 20% by weight, and/or the second resin is contained in a proportion of from 2 to 25% by weight, in particular 2 to 20% by weight.

4. Writing-, marking- and/or drawing fluid according to one of the preceding claims, **characterised in that** the ratio of the first resin to the second resin is between 1:1 and 1:5, in particular between 1:1 and 1:3.

5. Writing-, marking- and/or drawing fluid according to one of the preceding claims, **characterised in that**, as a solvent matrix, 50 to 80% by weight of at least one solvent, in particular an organic solvent, is contained.

6. Writing-, marking- and/or drawing fluid according to one of the preceding claims, **characterised in that**, in the solvent matrix, an alcohol and a ketone or an alcohol, a ketone and an ester is contained.

7. Writing-, marking- and/or drawing fluid according to one of the preceding claims, **characterised in that**, as a solvent, methyl-ethyl-ketone and/or 1-methoxy-2-propanol and/or ethanol and/or 1-propanol and/or 2-propanol and/or ethyl acetate is contained.

8. Writing-, marking- and/or drawing fluid according to one of the preceding claims, **characterised in that** at least one colourant, in particular having a proportion of from 5 to 20% by weight, in particular having a proportion of from 8 to 15% by weight, is contained.

9. Writing-, marking- and/or drawing fluid according to claim 8, **characterised in that** a dye, in particular a metal complex dye, and/or a colour pigment is contained as a colourant.

10. Writing-, marking- and/or drawing fluid according to one of the preceding claims, **characterised by** a viscosity of less than 20mPas, in particular less than 10mPas (Brookfield, 20°C, cone-plate CPE-40).

11. Writing instrument having a writing tip (3) made of a capillary material and a storage (2) made of a capillary material containing a writing-, marking- and/or drawing fluid according to one of the preceding claims.

## Revendications

1. Liquide d'écriture, de marquage et/ou de dessin d'instruments d'écriture, notamment d'instruments d'écriture capillaires, qui a une viscosité de moins de 50 mPas (brookfield, 20°C, cône-plaque CPE-40), contenant un mélange de résines dissous dans une matrice de solvant, comprenant au moins un solvant, le mélange de résines contenant, comme première résine, un ester de résine modifié ou une résine de polyester se présentant sous forme dissoute, et comme deuxième résine, une résine de maleinate une résine de colophane, notamment une résine de colophane modifiée au phénol, et dans lequel sont contenus, comme additifs, au moins un agent tensioactif fluoré comme agent mouillant, en une proportion de 0,3 à 2,0% en poids et au moins un copolymère de polyéthersiloxane comme agent lubrifiant, en une proportion de 0,3 à 2,0% en poids.

2. Liquide d'écriture, de marquage et/ou de dessin suivant la revendication 1, **caractérisé en ce que** sont contenus de 3 à 30% en poids de mélanges de résines.

3. Liquide d'écriture, de marquage et/ou de dessin suivant l'une des revendications précédentes, **caractérisé en ce que** la première résine est contenue en une proportion de 1 à 25% en poids, notamment de 1 à 20% en poids et/ou **en ce que** la deuxième résine est contenue en une proportion de 2 à 25% en poids, notamment de 2 à 20% en poids.

4. Liquide d'écriture, de marquage et/ou de dessin suivant l'une des revendications précédentes, **caractérisé en ce que** le rapport de la première résine à la deuxième résine est compris entre 1:1 et 1:5, notamment entre 1:1 et 1:3.

5. Liquide d'écriture, de marquage et/ou de dessin suivant l'une des revendications précédentes, **caractérise en ce qu'**il est contenu, comme matrice de solvant, de 50 à 80% en poids d'au moins un solvant, notamment d'un solvant organique.

6. Liquide d'écriture, de marquage et/ou de dessin suivant l'une des revendications précédentes, caractérisé en qu'est contenu, dans la matrice de solvant, un alcool et une cétone ou un alcool, une cétone et un ester.

7. Liquide d'écriture, de marquage et/ou de dessin suivant l'une des revendications précédentes, **caractérisé en ce qu'**est contenu, comme solvant, de la méthyléthylcétone et/ou du 1-méthoxy-2-propanol et/ou de l'éthanol et/ou du 1-propanol et/ou du 2-propanol et/ou de l'acétate d'éthyle.

8. Liquide d'écriture, de marquage et/ou de dessin suivant l'une des revendications précédentes, **caractérisé en ce qu'**il est contenu au moins un colorant, notamment en une proportion de 5 à 20% en poids, notamment en une proportion de 8 à 15% en poids.

9. Liquide d'écriture, de marquage et/ou de dessin suivant la revendication 8, **caractérisé en ce qu'**il est contenu, comme colorant, une substance colorante, notamment une substance colorante à complexe métallique et/ou un pigment colorant.

10. Liquide d'écriture, de marquage et/ou de dessin suivant l'une des revendications précédentes, **caractérisé par** une viscosité de moins de 20 mPas, notamment de moins de 10 mPas (brookfield, 20°C, cône-plaque CPE-40).

11. Instrument d'écriture, comprenant une pointe (3) d'écriture en un matériau capillaire et un réservoir (2) en un matériau capillaire, contenant un liquide d'écriture, de marquage et/ de dessin suivant l'une des revendications précédentes.
